# EUROPEAN PATENT SPECIFICATION

(11) **EP 2 712 401 B1**
(45) Date of publication and mention of the grant of the patent: **05.10.2016**
(21) Application number: 12718588.2
(22) Date of filing: 24.04.2012
(51) Int. Cl.: F03D 7/02

(54) **IMPROVED WIND TURBINE NOISE CONTROL METHODS**
VERBESSERTE VERFAHREN ZUR WINDTURBINENGERÄUSCHKONTROLLE
MÉTHODES DE SUPPRESSION DU BRUIT AMÉLIORÉES DANS UNE ÉOLIENNE

(30) Priority: 28.04.2011 DK 201170203
(43) Date of publication of application: 02.04.2014
(73) Proprietor: Vestas Wind Systems A/S, 8200 Aarhus N (DK)
(72) Inventor: ABDALLAH, Imad, DK-2000 Frederiksberg (DK); GODSK, Kristian, DK-8680 Ry (DK); ROMBLAD, Jonas, DK-8240 Risskov (DK); LIM, Chee Kang, Singapore 259343 (SG)
(74) Representative: Vestas Patents Department
(86) International application number: PCT/DK2012/050134
(87) International publication number: WO 2012/146252

(56) References cited:
- EP-A2- 2 000 665
- EP-A2- 2 031 245
- US-A1- 2007 036 653
- US-A1- 2010 158 687

## Description

### TECHNICAL FIELD

This invention relates to wind turbines generally, and specifically to the control of noise emitted by wind turbines.

### BACKGROUND OF THE INVENTION

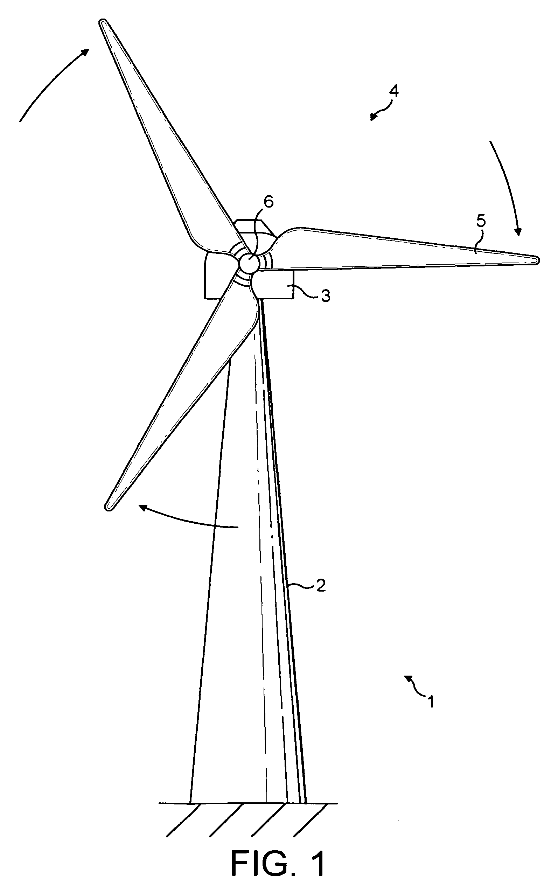

Figure 1 illustrates a conventional wind turbine 1. The wind turbine 1 comprises a wind turbine tower 2 on which a nacelle 3 is mounted. A rotor 4 comprising at least one blade 5 is mounted on a hub 6. The hub 6 is connected to the nacelle 3 through a low speed shaft (not shown) extending from the nacelle front. The wind turbine illustrated in Figure 1 may be a small model intended for domestic or light utility usage, or may be a large model, such as those that are capable of generating several MWs of power and are suitable for use in large scale electricity generation on a wind farm for example. In the latter case, the diameter of the rotor could be as large as 150 metres or more.

Most modern wind turbines are controlled and regulated continuously during operation with the purpose of ensuring optimal performance in all operating conditions, such as at different wind speeds or profiles or subject to different demands from the power grid. The wind turbine can also be regulated to account for fast local variations in the wind velocity, caused by wind gusts. Also, as the loads on each of the blades vary due to the passing of the tower or the actual wind velocity varying with the distance to the ground (the wind profile), the ability to regulate each of the rotor blades individually is advantageous as it enables the wind loads to be balanced and reduces the yawing and tilting loads on the rotor.

There are different ways of changing shape and position, including pitch control and camber control. Pitch control involves rotating the blade 5 around its longitudinal axis at the junction with the hub 6. Camber control is effected by changing the aerodynamic surface of part of or the entire length of the blade, thereby increasing or decreasing the blade lift and drag correspondingly.

Wind turbines can emit noise, with aerodynamic noise sources including separated/stall flow noise, trailing edge noise (blunt and otherwise), laminar boundary layer vortex shedding noise, tip noise, noise from surface imperfections (such as sensors, damage, unwanted adhesions), blade rotation noise, lifting/control surface loading noise, noise from the interaction between the blades and the wake vortex (unsteady loading noise), noise from the interaction of the blades with atmospheric turbulence (turbulent inflow noise), and noise from the blade passing the wind turbine tower. Wind turbines also produce mechanical noise, for example from the gearbox.

Aerodynamic noise production is highly dependent on the relative velocity of the wind and the wind turbine blades. A faster relative velocity results in greater production of noise. Forthis reason, simply reducing the blade velocity by restriction or reduction of the RPM (or generator torque) of the wind turbine is presently a preferred method of noise control. This is generally an effective method, but it results in a reduced power output. Similarly, the blade pitch can be reduced to reduce blade load, again reducing noise production but also reducing power output.

US 2010/158687A1 discloses to modify the length of a rotor blade to reduce noise or to optimize profits or both. The controls may be based on data from various types of sensors including accelerometers, sound meters, strain gauges and the like.

EP 2 000 665 A2 discloses an anti-noise wind turbine which comprises a blade rotor which activates an electric generator and control mechanisms for said rotor in which the blades include mechanisms which allow the reduction of its lift on a length, measured from its tip, less than or equal to its radius R and said control mechanisms allow said lift reduction mechanisms to be activated cyclically during the passing of each blade through a circular sector S less than or equal to 160 degrees.

As it is desirable to extract as much energy from the wind as possible, operating a wind turbine at less than maximum possible power output due to noise issues is highly undesirable. The invention aims to address this disadvantage.

### SUMMARY OF THE INVENTION

According to a first aspect of the invention there is provided a method of operating a wind turbine comprising at least one trailing edge control surface on at least one rotor blade, comprising operating the wind turbine in a first mode, in which a rotor blade angle of attack and a trailing edge control surface deflection are set according to one or more wind turbine control parameters, and selectively operating the wind turbine in a second, noise reduced, mode, in which for a given set of wind turbine control parameters, the trailing edge control surface deflection is increased towards the pressure side and the rotor blade angle of attack is decreased with respect to the first mode. This can provide a method of reducing the noise impact of a wind turbine while maximising its power output.

Preferably, at least one of the trailing edge control surfaces is situated in an outer half of the blade.

Preferably, the wind turbine control parameters comprise wind speed, blade azimuth angle, and/or time of day.

Preferably, a power output of the wind turbine is the same in the first mode and the second mode. This is a preferred embodiment in which there is no loss of power output due to running in a noise limited mode.

Preferably, the one or more trailing edge control surfaces comprise one or more trailing edge flaps and/or Gurney flaps. Preferred embodiments use trailing edge flaps or Gumey flaps as they are able to significantly vary the aerodynamic properties of the wind turbine blade.

Preferably, the method is carried out by a wind turbine controller.

Preferably, the turbine controller acts to reduce a noise level within a specific decibel range or at a specific frequency. Preferably, the turbine controller acts to reduce the A-weighting of noise emitted by a wind turbine. These approaches reduce the environmental impact of the wind turbine. As some frequencies are more environmentally disruptive than others, it can be desirable to reduce the noise output within a specific range or at a specific frequency.

Preferably, the turbine controller performs the method on a regular periodic basis, or on a cyclic basis. This method enables the noise output to be controlled for a variety of variables that affect noise, such as wind speed, weather, or turbulence.

Preferably, the turbine controller performs the method on a cyclic basis. This method enables the noise output to be controlled for variables such as wind shear and wind variation due to a wind turbine tower.

Preferably, the method comprises calculating a theoretical value of a noise output to ascertain whether, and how, to modify one or more wind turbine operating parameters. This provides information upon which to base changes in operating conditions, and can be simpler and easier than measurement of the noise output.

Preferably, a noise sensor is used to ascertain whether, and how, to modify one or more wind turbine operating parameters. This can be preferable to using a theoretical calculation of a noise output as it provides the actual levels of noise.

A third aspect of the invention comprises a controller for a wind turbine configured to carry out the steps of one or more of the abovementioned methods. A fourth aspect of the invention comprises a wind turbine controlled by the controller.

It should be noted that what is here referred to as a controller can be embodied as one single unit, or a plurality of units that can be arranged at different locations in the wind turbine, and adapted to share information with each other. For example, there could be a local trailing edge flap controller or a separate controller for fast load alleviation.

### BRIEF DESCRIPTION OF THE DRAWINGS

An embodiment of the invention will now be described, by way of example only, and with reference to the accompanying drawings in which:
Figure 1 (referred to above) illustrates a known wind turbine;
Figure 2 illustrates a cross-sectional view in the chordwise direction through a wind turbine blade;
Figure 3 illustrates a cross-sectional view in the chordwise direction through a wind turbine blade with a flap in a different position.
Figure 4 is a graph showing the noise level distribution at different flap angles; and
Figure 5 illustrates the load distribution along the spanwise length of a wind turbine blade.

### DETAILED DESCRIPTION OF THE PREFERRED EMBODIMENTS

An embodiment of the invention relates to a wind turbine having a rotor with one or more blades, wherein one or more of the blades includes at least one control surface.

The term control surface refers to a movable surface of the wind turbine blade for modifying the aerodynamic profile of the wind turbine blade. Examples of control surfaces include ailerons, leading or trailing edge flaps, leading edge slats, Krueger flaps, Gurney flaps (wickerbill flaps), stall inducing flaps, vortex generators for controlling the boundary layer separation, adaptive elastic members incorporated in the blade surface, means for changing the surface roughness, adjustable openings or apertures, or movable tabs. A blade may have one or more such control surfaces, and each control surface will typically only extend along part of the spanwise length of a blade.

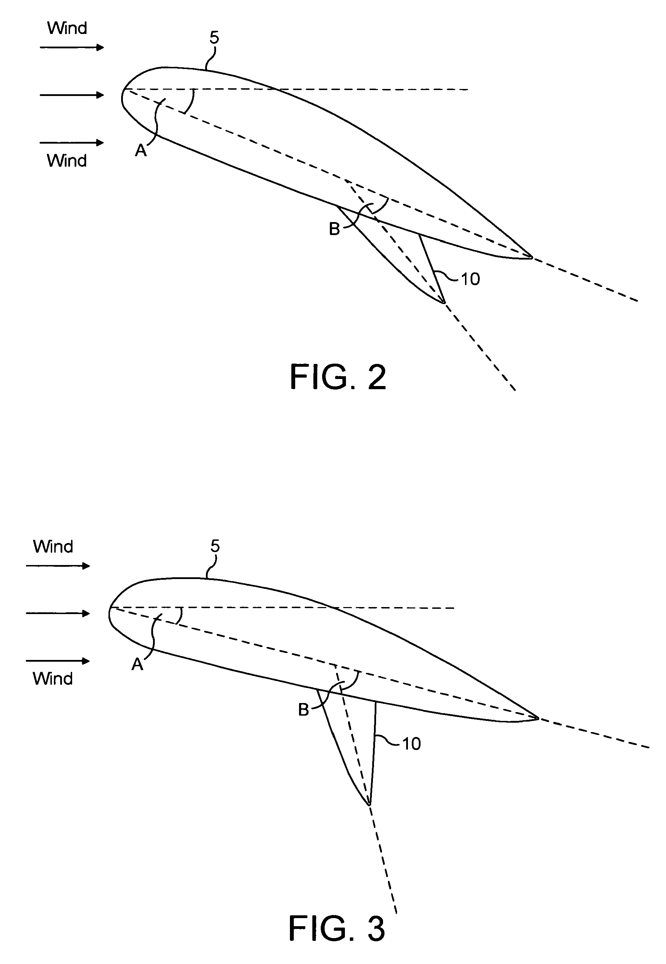

Figure 2 shows a wind turbine rotor blade 5 in a first operating mode. Blade 5 describes an angle of attack A to the direction of the wind. Trailing edge flap 10 is attached to blade 5 and describes a deflection B relative to the aerofoil chord line. The deflection B may be 0, or alternatively the deflection B may differ from angle of attack A, for example to alter the aerodynamic loading on part of the blade.

Figure 3 shows a wind turbine blade 5 with a trailing edge flap 10 attached. The blade 5 is now in a second operating mode. In comparison to Figure 2, the angle of attack A is reduced, and the deflection B is increased. This improves the noise spectra of the wind turbine, and may additionally reduce the overall amount of noise emitted by the wind turbine. Various combinations of angle of attack A and deflection B can be used to achieve the desired aerodynamic forces and moments.

The angle of attack A typically varies between -35 and 45 degrees, or more preferably -15 and 25 degrees, or most preferably between 2 and 12 degrees. The deflection B may vary between - 90 and 90 degrees, or more preferably between -30 and 45 degrees, or most preferably between -20 and 20 degrees. In an embodiment where the deflection B is only varied towards the pressure side of the blade, the deflection B may vary between 0 and 90 degrees, or preferably between 0 and 45 degrees, or most preferably between 0 and 20 degrees.

Whilst control surfaces can be placed anywhere along the length of the blade, they will have a greater influence when placed proximate the tip of the blade. In this area, the rotational speed is greatest, and the control surfaces therefore have most influence. The invention can be implemented using a single control surface, but the use of a plurality of control surfaces allows for greater flexibility for varying load, noise and output power. It is presently considered preferable to arrange the control surface or surfaces in the outermost half of the blade, but where a number of control surfaces are deployed at least one of these may be in the innermost half of the blade.

A preferred embodiment of this invention uses one or more trailing edge flaps or Gurney flaps. This is because the aerodynamic properties of the blade must be considerably altered to significantly modify the noise emission (noise output).

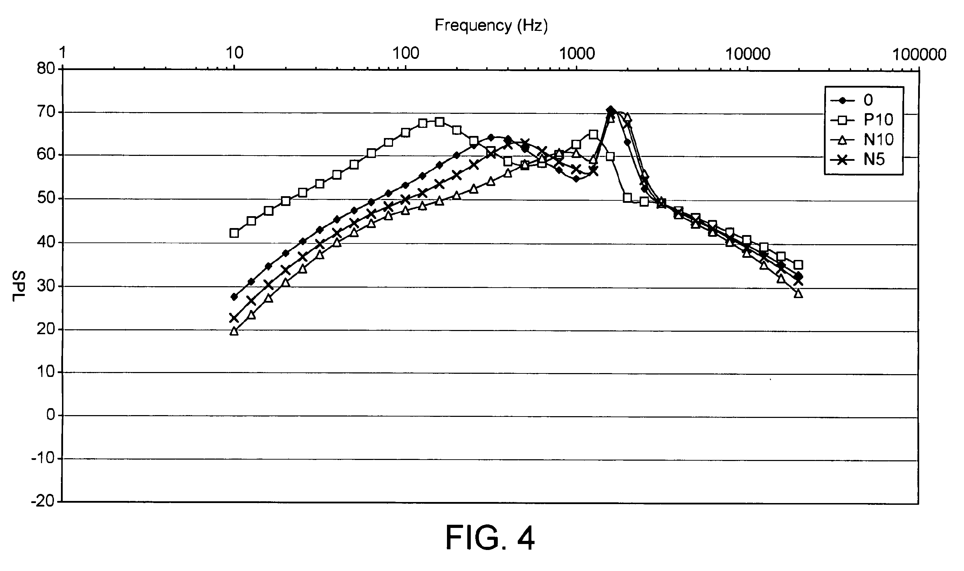

Figure 4 shows aerofoil noise spectra. The noise spectrum or noise emission spectrum is typically the overall noise output across the full audible frequency range, although it may be defined as only part of the audible spectrum or extend beyond the audible spectrum. Typical ranges are 10 to 20,000Hz, 20 to 15,000Hz, 50 to 10,000Hz and 100 to 5,000Hz. In some embodiments, the emission spectrum could be measured over one or more specific ranges, such as 1,000 to 4,000Hz, to comply with local regulations.

The variation in noise emission spectrum when the flap deflection is changed can be seen in Figure 4. The y-axis is the SPL, or sound pressure level, in decibels. The x-axis is logarithmic and shows the frequency in Hertz. Four curves can clearly be seen in the graph, each showing a different flap deflection (similar to deflection B in Figures 2 and 3). At a flap deflection of 0 degrees the noise spectrum is shown by a line of rhombi. At a flap deflection of 10 degrees, the noise spectrum is shown by a line of squares. The other lines show other flap deflections.

When the flap is at an angle of 0 degrees, a spike can be seen at around 1 to 2 kHz. When the flap is at an angle of 10 degrees, this spike has a lower level and has moved to a lower frequency, and there is significantly increased noise production in the 10 to 200 Hz region in comparison to the levels for lower flap deflection measurements.

The human hearing range can extend from about 20Hz to 20kHz. However, sensitivity is lower at the extremes of this range. The peak of human sensitivity is in the range 1-4 kHz, so the high-pitched whine produced by the peak in Figure 4 at around 1-2 kHz is likely to be far more annoying than low rumbles produced in the 10-100 Hz range. Therefore, even when overall sound production is not reduced, reducing the dominant emission frequencies or shifting the dominant emission frequencies to a less uncomfortable frequency in this way is a desirable result.

Some noise measurements and regulations use an integration of noise level for different frequencies, with different weightings for different frequencies. One weighting scheme is the "A-weighting" scheme, which attempts to mimic the sensitivity of human hearing. Under such a scheme, lowering a spike or bump in the spectra, such as the spike around 1-2 kHz in Figure 4, only pays off if the noise in the frequencies around the spike does not rise too much. It can also be worth shifting noise from a "high-sensitivity" frequency band to frequencies where the sensitivity, and hence the weighting, is lower.

A reduction in power output as described above can be smaller than the reduction that results from known methods of noise reduction or control. In a preferred embodiment, power output can be improved by at least 2%.

Wind turbine control strategies may include several different noise control strategies, and decreasing the blade pitch and increasing the flap deflection as shown in Figure 3 is just one possible method of control. There are several ways in which the various wind turbine control mechanisms can be used to improve power production and control the noise output. All of the following methods provide a control strategy whereby the power output at a given noise volume or noise annoyance level can be improved.

The RPM of the wind turbine can be reduced, and the deflection of one or more flaps can be increased. In terms of power output, the increase in camber can partly or completely cancel out the decrease in RPM of the wind turbine, thus partially or completely maintaining the same power production. In this embodiment, the pitch of the blade itself may be unchanged. As with the other methods of noise control disclosed herein, this significantly reduces, or entirely removes, the need to reduce the power output of the wind turbine to reduce noise emission.

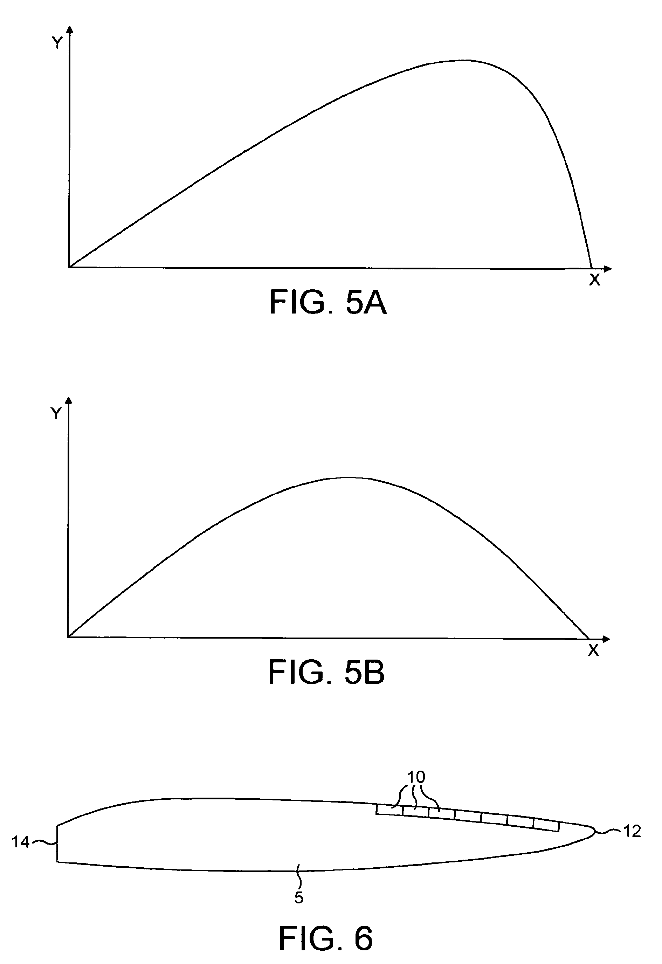

Figure 5 shows the load distribution along the length of a wind turbine blade. The y-axis indicates load, and the x-axis shows distance from the hub. Figure 5A shows a typical distribution of the load in a normal operating mode, in which the load is concentrated largely towards the tip of the blade. Figure 5B shows the load distribution in a noise controlling mode, where the load distribution is altered so that the load on the outermost portions of the blade proximate the tip is reduced in comparison to the load in the normal operating mode.

Figure 6 illustrates a wind turbine blade 5 in one embodiment of the invention. A plurality of flaps 10 is provided on the trailing edge of the blade 5, preferably on the outer half of the blade; that is, the part of the blade situated closer to the blade tip 12 than the blade root 14. Alteration of the load distribution can be effected by manipulation of these flaps 10. The flaps may be moved individually or together. For example, these flaps can be about 1 metre long in the spanwise direction.

In normal operation, the blade load will typically peak at about 85% (perhaps 80% to 90%) of the distance from the hub to the tip. Changing the load distribution to ameliorate the noise output as outlined above will typically move the peak load position closer to the hub, for example, to a point about 70% (perhaps 60% to 85%) of the distance from the hub to the blade tip. The actual load modification will vary greatly depending on the physical structure of the blade, and some blades will have a very different load distribution to that shown in Figure 5. Nevertheless, the broad idea of load redistribution by flap manipulation will work on most types of wind turbine blade.

As the relative velocity of the outer portion of the blade with respect to the wind is greater further away from the hub, most noise is produced by the outer regions of the blade, with noise emission per unit load per unit length typically increasing as distance from the hub increases. Reduction of the load on the outer portions of the blade as shown in Figure 5 can have an advantageous effect on noise emission. In other words, moving the average loading point closer to the hub is advantageous in terms of modifying the emitted noise. In particular, a change in the radial load distribution by means of trailing edge flaps affects the tip vortex strength and consequently modifies the vortex noise.

Reducing the load at the blade tip can be achieved by flap manipulation; either by reducing the deflection of flaps near the blade tip, or by increasing the deflection of flaps closer to the hub, or by a mixture of both. In some embodiments, altering the pitch of the blade might also help in altering the blade load distribution.

Flaps near the hub are commonly called inboard flaps, and flaps near the blade tip are commonly called outboard flaps. In a preferred embodiment, the deflection of one or more inboard flaps is increased and the deflection of one or more outboard flaps is decreased. In another preferred embodiment, the inboard flaps are stiffer than the outboard flaps. Making the outboard flaps more flexible dampens out tip trailing edge noise. Extra assistance to dampen out the trailing edge noise could also be provided by different outboard flap geometries, or the use of holes or brushes as part of the flap.

Increasing the lift on one section of the blade by moving a flap towards the pressure side increases the proportion of the load taken by that section of the blade. If the flap is closer to the hub than the average loading point of the blade (i.e. the point at which a vertical line on Figure 5A would bisect the curve, leaving two equally sized areas under the curve), then the average loading point of the blade would be moved towards the hub. This would also increase the overall lift of the blade.

Alternatively or additionally, a flap further from the hub than the average loading point of the blade could be moved towards the suction side. This would also move the average loading point of the blade towards the hub and would reduce the overall lift of the blade. If a flap was moved towards the suction side (away from the pressure side) in this way, and another flap was moved towards the pressure side as described in the previous paragraph, then any change in the overall lift of the blade could be reduced or removed entirely.

A wind turbine blade typically has a substantially fixed shape for the majority of its length (in this context, the fixed nature of the blade does not include any flaps attached to the blade). Since the speed due to rotation increases along the span of the rotating blades, the shape of the blades is typically twisted to have the desired local angle of attack along the length of the blade.

Modification of the radial load distribution as illustrated in Figure 5 may be taken one step further, and flaps can be activated in such a way that the effective geometric twist of the blade is modified. The turbine will then preferably use a different set of operating parameters so that the turbine runs optimally with respect to noise, power production and loads with the new combination of flap deflections.

It is beneficial to ascertain the noise levels produced by wind turbines to help ascertain the best control reaction. However, it is difficult to measure noise directly from a specific noise source with any degree of accuracy, and it is therefore considered that in normal operation, using theoretical models to provide an estimate of the wind turbine noise output is as accurate as using external sensors. Various factors can be used to help estimate the noise output, including wind turbine RPM, blade pitches, flap deflections, and wind speeds. Nevertheless, it may be advantageous in some cases to measure noise rather than estimate it, and in one preferred embodiment of the invention, a wind turbine controller uses a signal from one or more noise sensors to determine if and how wind turbine RPM, blade pitches, and/or flap deflections should be modified. A set of predetermined values for wind turbine RPM, blade pitch and flap deflection could be provided, detailing how the wind turbine should be run in response to factors such as wind speed, time of day, wind direction or other environmental parameters such as temperature or humidity.

As previously mentioned, wind turbines generate a large number of different aerodynamic noise sources. The various different noise sources can be addressed by a variety of different control strategies, which can be used alone or in combination.

Typically, the longest duration between one control reassessment (coupled with any subsequent adjustment) and the next would be hourly or daily. This may simply involve switching to a lower noise setting overnight to reduce the noise output when people are normally asleep. Weather condition adjustments might also be made hourly or daily. A typical weather condition response would be switching to a lower noise setting when the wind speed is high, since noise output from wind turbines is higher in higher winds. A lower noise setting might also be used in turbulent conditions, when the noise output might be greater than normal.

Control responses to turbulence are usefully made on a more frequent basis than hourly or daily. It is common to run wind turbine settings such as pitch modification on 10 minute averages, and this timescale might also be appropriate for making modifications in response to turbulence levels. Modifications in response to varying weather changes can also be made using 10 minute averages.

In addition, there are several possible applications for rotational (cyclic) level control. The wind barrier provided by the tower tends to result in different wind conditions as each blade passes the tower on every rotation. The change in conditions commonly results in a 'swach' noise each time the blade passes the tower. It is often advantageous to modify the profile of blades as they pass the tower to minimise the shock caused by the change in conditions, thus reducing or modifying this cyclic noise emission.

Shear conditions can produce significantly greater wind speeds at the highest reach of the wind turbine than at the ground. This could mean that a blade would fall within allowed noise emission parameters whilst near the ground in the lower portion of its traverse, but that in the higher wind speeds whilst at the upper portion of its traverse, the emitted noise is beyond an acceptable level. The previously outlined control methods can be used on a cyclic level to reduce the noise output during the upper portion of traverse of a blade, whilst maintaining an optimum power output from the blade's traverse closer to the ground.

Finally, the noise emission is not evenly distributed on the wind turbine, or as a function of position relative to the face of the wind turbine. Nor is it evenly distributed in terms of distance to the receiver. Rotation level trailing edge flap manipulation may be used to even out unbalanced and cyclic noise such as Doppler effect variations and noise variations due to directivity, thus producing a more consistent noise output, which is therefore less noticeable in the surrounding area.

The above discussion concentrates on angled control surfaces. For Gurney flaps, the flap deflection is, strictly speaking, constant. For the purposes of this application, the extent to which a Gurney flap is extended is defined as the degree of deflection, for brevity. Thus a Gurney flap deflected by 20 degrees is actually extended twice as much as a Gurney flap deflected by 10 degrees, rather than having its angle altered.
Various modifications to the embodiments described are possible and will occur to those skilled in the art without departing from the invention which is defined by the following claims.

## Claims

1. A method of operating a wind turbine (1) comprising at least one trailing edge control surface on at least one rotor blade (5), comprising operating the wind turbine in a first mode, in which a rotor blade angle of attack (A) and a trailing edge control surface (10) deflection are set according to one or more wind turbine control parameters, and **characterised by** selectively operating the wind turbine in a second, noise reduced, mode, in which for a given set of wind turbine control parameters, the trailing edge control surface (10) deflection is increased towards the pressure side and the rotor blade angle of attack is decreased with respect to the first mode.

2. A method according to claim 1, wherein at least one of the trailing edge control surfaces is situated in an outer half of the blade.

3. A method according to any preceding claim, wherein the wind turbine control parameters comprise wind speed, blade azimuth angle, and/or time of day.

4. A method according to any preceding claim, wherein a power output of the wind turbine is the same in the first mode and the second mode.

5. A method according to any preceding claim, wherein the one or more trailing edge control surfaces comprise one or more trailing edge flaps and/or Gurney flaps.

6. A method according to any preceding claim, wherein the method is carried out by a wind turbine controller.

7. A method according to claim 6, wherein the turbine controller acts to reduce a noise level within a specific decibel range or at a specific frequency.

8. A method according to claim 6 or 7, wherein the turbine controller acts to reduce the A-weighting of noise emitted by a wind turbine.

9. A method according to any of claims 6 to 8, wherein the turbine controller performs the method on a regular periodic basis.

10. A method according to any of claims 6 to 9, wherein the turbine controller performs the method on a cyclic basis.

11. A method according to any preceding claim, comprising calculating a theoretical value of a noise output to ascertain whether, and how, to modify one or more wind turbine operating parameters.

12. A method according to any preceding claim, wherein a noise sensor is used to ascertain whether, and how, to modify one or more wind turbine operating parameters.

13. A controller for a wind turbine configured to carry out the steps of the method of any preceding claim.

14. A wind turbine (1) controlled by a controller according to claim 13.

## Patentansprüche

1. Verfahren zum Betreiben einer Windturbine (1), die wenigstens eine Abströmkanten-Steuerfläche an wenigstens einem Rotorblatt (5) umfasst, das ein Betreiben der Windturbine in einer ersten Betriebsart umfasst, bei der ein Rotorblatt-Anströmwinkel (A) und ein Abströmkanten-Steuerfläche-(10)-Ausschlag entsprechend einem oder mehreren Windturbinen-Steuerparametern eingestellt werden, und das **gekennzeichnet ist durch** ein wahlweises Betreiben der Windturbine in einer zweiten, schallverringerten, Betriebsart, bei der für eine vorgegebene Einstellung von Windturbinen-Steuerparametern der Abströmkanten-Steuerflächen-(10)-Ausschlag in Richtung der Druckseite vergrößert und der Rotorblatt-Anströmwinkel gegenüber der ersten Betriebsart verringert wird.

2. Verfahren nach Anspruch 1, bei dem sich wenigstens eine der Abströmkanten-Steuerflächen an einer äußeren Hälfte des Blattes befindet.

3. Verfahren nach einem der vorhergehenden Ansprüche, bei dem die Windturbinen-Steuerparameter Windgeschwindigkeit, Blattazimuthwinkel und/oder Tageszeit umfassen.

4. Verfahren nach einem der vorhergehenden Ansprüche, bei dem die Energieausgabe der Windturbine bei der ersten Betriebsart und der zweiten Betriebsart gleich ist.

5. Verfahren nach einem der vorhergehenden Ansprüche, bei dem die eine oder mehreren Abströmkanten-Steuerflächen eine oder mehrere Abströmkantenklappen und/oder Gurney-Klappen umfassen.

6. Verfahren nach einem der vorhergehenden Ansprüche, bei dem das Verfahren durch einen Windturbinenregler ausgeführt wird.

7. Verfahren nach Anspruch 6, bei dem der Windturbinenregler wirkt, um das Schallniveau innerhalb eines bestimmten Dezibelbereiches oder bei einer bestimmten Frequenz zu verringern.

8. Verfahren nach Anspruch 6 oder 7, bei dem der Windturbinenregler wirkt, um die A-Gewichtung des von der Windturbine abgegebenen Schalls zu verringern.

9. Verfahren nach einem der Ansprüche 6 bis 8, bei dem der Windturbinenregler das Verfahren auf einer regelmäßigen periodischen Basis durchführt.

10. Verfahren nach einem der Ansprüche 6 bis 9, bei dem der Windturbinenregler das Verfahren auf einer zyklischen Basis durchführt.

11. Verfahren nach einem der vorhergehenden Ansprüche, das ein Berechnen eines theoretischen Wertes einer Schallabgabe umfasst, um zu ermitteln, ob, und wie, einer oder mehrere Windturbinen-Betriebsparameter zu ändern sind.

12. Verfahren nach einem der vorhergehenden Ansprüche, bei dem ein Schallsensor verwendet wird, um zu ermitteln, ob, und wie, einer oder mehrere Windturbinen-Betriebsparameter zu ändern sind.

13. Regler für eine Windturbine, der eingerichtet ist, die Schritte des Verfahrens nach einem der vorhergehenden Ansprüche durchzuführen.

14. Windturbine (1), die von einem Regler nach Anspruch 13 geregelt wird.

## Revendications

1. Procédé de fonctionnement d'une éolienne (1) comprenant au moins une surface de commande de bord de fuite sur au moins une pale de rotor (5), comprenant le fonctionnement de l'éolienne dans un premier mode, dans lequel un angle d'attaque de pale de rotor (A) et une déflexion de surface de commande de bord de fuite (10) sont définis selon un ou plusieurs paramètres de commande d'éolienne, et **caractérisé par** le fonctionnement sélectif de l'éolienne dans un second mode à bruit réduit, dans lequel pour un ensemble donné de paramètres de commande d'éolienne, la déflexion de surface de commande de bord de fuite (10) est augmentée vers le côté de pression et l'angle d'attaque de pale de rotor est diminué par rapport au premier mode.

2. Procédé selon la revendication 1, dans lequel au moins une des surfaces de commande de bord de fuite est située dans une moitié extérieure de la pale.

3. Procédé selon l'une quelconque des revendications précédentes, dans lequel les paramètres de commande d'éolienne comprennent la vitesse du vent, l'angle azimutal de pale et/ou le moment de la journée.

4. Procédé selon l'une quelconque des revendications précédentes, dans lequel une puissance de sortie de l'éolienne est la même dans le premier mode et le second mode.

5. Procédé selon l'une quelconque des revendications précédentes, dans lequel les une ou plusieurs surfaces de commande de bord de fuite comprennent un ou plusieurs volets de bord de fuite et/ou volets Gurney.

6. Procédé selon l'une quelconque des revendications précédentes, dans lequel le procédé est réalisé par un dispositif de commande d'éolienne.

7. Procédé selon la revendication 6, dans lequel le dispositif de commande de turbine agit pour réduire un niveau de bruit dans une plage de décibels spécifique ou à une fréquence spécifique.

8. Procédé selon la revendication 6 ou 7, dans lequel le dispositif de commande de turbine agit pour réduire la pondération A du bruit émis par une éolienne.

9. Procédé selon l'une quelconque des revendications 6 à 8, dans lequel le dispositif de commande de turbine réalise le procédé sur une base périodique régulière.

10. Procédé selon l'une quelconque des revendications 6 à 9, dans lequel le dispositif de commande de turbine réalise le procédé sur une base cyclique.

11. Procédé selon l'une quelconque des revendications précédentes, comprenant le calcul d'une valeur théorique d'une émission de bruit pour vérifier s'il faut, et comment, modifier un ou plusieurs paramètres de fonctionnement d'éolienne.

12. Procédé selon l'une quelconque des revendications précédentes, dans lequel un capteur de bruit est utilisé pour vérifier s'il faut, et comment, modifier un ou plusieurs paramètres de fonctionnement d'éolienne.

13. Dispositif de commande pour une éolienne configuré pour réaliser les étapes du procédé selon l'une quelconque des revendications précédentes.

14. Eolienne (1) commandée par un dispositif de commande selon la revendication 13.
